# EUROPEAN PATENT APPLICATION

(11) **EP 4 723 646 A1**
(43) Date of publication of application: **08.04.2026**
(21) Application number: 24810499.4
(22) Date of filing: 25.05.2024
(51) Int. Cl.: H04N 21/2187, H04N 21/431, H04N 21/4788

(54) **LIVE-STREAMING INTERACTION METHOD AND APPARATUS, AND DEVICE AND STORAGE MEDIUM**

(30) Priority: 25.05.2023 CN 202310602716
(71) Applicant: Beijing Zitiao Network Technology Co., Ltd., Beijing 100190 (CN)
(72) Inventor: LIU, Zirui, Beijing 100028 (CN); LI, Shanshan, Beijing 100028 (CN)
(74) Representative: Isarpatent
(86) International application number: PCT/CN2024/095373
(87) International publication number: WO 2024/240264

(57) **Abstract**

The disclosure relates to method, apparatus, device and storage medium for live streaming interaction. The method proposed herein includes: displaying a live streaming interface of a first live streaming room; and displaying a first area corresponding to the first live streaming room and a second area corresponding to a second live streaming room in the live streaming interface in response to a cooperative interaction event associated with at least the first live streaming room and the second live streaming room, the cooperative interaction event corresponding to a common interaction target of the first live streaming room and the second live streaming room; wherein the live streaming interface further displays an interaction component associated with both of the first live streaming room and the second live streaming room, the interaction component indicates a completion degree of the common interaction target, and the completion degree is determined based on a first group of interaction events in the first live streaming room and a second group of interaction events in the second live streaming room. In this way, embodiments of the disclosure can link a plurality of live streaming rooms in live streaming, enhance collaboration between live streaming rooms, and improve the user's live streaming experience.

## Description

### CROSS-REFERENCE

This application claims priority to Chinese Patent Application No. 202310602716.8, filed on May 25, 2023 and entitled "METHOD, APPARATUS, DEVICE AND STORAGE MEDIUM FOR LIVE STREAMING INTERACTION", the disclosure of which is incorporated herein by reference in its entirety.

### FIELD

Embodiments of the present disclosure generally relate to the computer field, and in particular, to method, apparatus, device, and computer-readable storage medium for live streaming interaction broadcasting.

### BACKGROUND

With the development of computer technology, live streaming technology that allows people to interact online using the Internet and streaming media technology is becoming increasingly prosperous. It has gradually become a mainstream interaction method because it integrates rich elements such as images, text, and sounds.

Live streaming can create a strong sense of presence through real, vivid and instant content presenting, achieving an impressive and lasting interaction effect. In addition, live streaming allows users to interact with other users in real time. Therefore, how to support interaction more conveniently and provide users with a better interaction experience has become the focus of people's attention.

### SUMMARY

In a first aspect of the present disclosure, a method for live streaming interaction is provided. The method includes: displaying a live streaming interface of a first live streaming room; and displaying a first area corresponding to the first live streaming room and a second area corresponding to a second live streaming room in the live streaming interface in response to a cooperative interaction event associated with at least the first live streaming room and the second live streaming room, the cooperative interaction event corresponding to a common interaction target of the first live streaming room and the second live streaming room; wherein the live streaming interface further displays an interaction component associated with both of the first live streaming room and the second live streaming room, the interaction component indicates a completion degree of the common interaction target, and the completion degree is determined based on a first group of interaction events in the first live streaming room and a second group of interaction events in the second live streaming room.

In a second aspect of the present disclosure, an apparatus for live streaming interaction is provided. The apparatus includes: an interface presenting module, configured to display a live streaming interface of a first live streaming room; an area displaying module, configured to display a first area corresponding to the first live streaming room and a second area corresponding to a second live streaming room in the live streaming interface in response to a cooperative interaction event associated with at least the first live streaming room and the second live streaming room, the cooperative interaction event corresponding to a common interaction target of the first live streaming room and the second live streaming room; wherein the live streaming interface further displays an interaction component associated with both of the first live streaming room and the second live streaming room, the interaction component indicates a completion degree of the common interaction target, and the completion degree is determined based on a first group of interaction events in the first live streaming room and a second group of interaction events in the second live streaming room.

In a third aspect of the present disclosure, an electronic device is provided. The device includes at least one processing unit; and at least one memory coupled to the at least one processing unit and storing instructions for execution by the at least one processing unit, the instructions, when executed by the at least one processing unit, causing the device to perform the method of the first aspect.

In a fourth aspect of the present disclosure, a computer-readable storage medium is provided, wherein a computer program is stored on the computer-readable storage medium, and the computer program can be executed by a processor to implement the method of the first aspect.

It is to be understood that the summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Through the following detailed description with reference to the accompanying drawings, the above and other objectives, features, and advantages of example embodiments of the present disclosure will become more apparent. In the example embodiments of the present disclosure, the same reference numerals usually refer to the same components.
Fig. 1 shows a schematic diagram of an example environment in which embodiments of the present disclosure may be implemented;
Figs. 2A to 2G respectively illustrate example interfaces of a live streaming interaction process according to some embodiments of the present disclosure;
Fig. 3 shows a flowchart of an example process of live streaming interaction according to some embodiments of the present disclosure;
Fig. 4 shows a schematic structural block diagram of an apparatus for live streaming interaction according to some embodiments of the present disclosure; and
Fig. 5 shows a block diagram of an electronic device capable of implementing various embodiments of the present disclosure.

### DETAILED DESCRIPTION

The principle of the present disclosure will now be described with reference to some embodiments. It is to be understood that these embodiments are described only for the purpose of illustration and help those skilled in the art to understand and implement the present disclosure, without suggesting any limitation as to the scope of the disclosure. The disclosure described herein can be implemented in various manners other than the ones described below.

It should be noted that the titles of any sections/subsections provided herein are not restrictive. Various embodiments are described throughout this article, and any type of embodiment may be included under any section/subsection. In addition, the embodiments described in any section/subsection may be combined in any manner with any other embodiments described in the same section/subsection and/or different sections/subsections.

In the description of the embodiments of the present disclosure, the term "including" and similar terms should be understood as open inclusion, that is, "including but not limited to". The term "based on" should be understood as "based at least in part on". The term "one embodiment" or "the embodiment" should be understood as "at least one embodiment". The term "some embodiments" should be understood as "at least some embodiments". Other explicit and implicit definitions may be included below. The terms "first", "second", etc. may refer to different or the same objects. Other explicit and implicit definitions may be included below.

The embodiments of the present disclosure may involve user data, data acquisition and/or use, etc. These aspects are subject to the corresponding laws, regulations and relevant provisions. In the embodiments of the present disclosure, all data collection, acquisition, processing, processing, forwarding, use, etc. are carried out on the premise that the user knows and confirms. Accordingly, when implementing each embodiment of the present disclosure, the type, scope of use, usage scenario, etc. of the data or information that may be involved should be informed to the user and the user's authorization should be obtained in an appropriate manner in accordance with the relevant laws and regulations. The specific notification and /or authorization method can vary according to the actual situation and application scenario, and the scope of the present disclosure is not limited in this respect.

If the solutions in this specification and the embodiments involve the processing of personal information, they will be processed on the premise of having a legal basis (such as obtaining the consent of the subject of personal information, or being necessary for the performance of a contract, etc.), and will only be processed within the scope of regulations or agreements. If a user refuses to process personal information other than the necessary information for basic functions, it will not affect the user's use of basic functions.

As briefly mentioned above, live streaming can create a strong sense of presence through real and vivid communication, achieving a communication effect that is impressive and memorable. In addition, live streaming allows users to interact with each other in real time. In traditional live streaming, audience users can only interact with the current streamer user in a single live streaming room based on text methods such as real-time comment, and the interaction form is single and the ability is limited, resulting in limited user interaction in the live streaming room and limited live streaming effect.

The present disclosure proposes a live streaming interaction solution. According to the solution, after presenting the live streaming interface of the first live streaming room, in response to a cooperative interaction event associated with at least the first live streaming room and the second live streaming room, a first area corresponding to the first live streaming room and a second area corresponding to the second live streaming room can be displayed in the live streaming interface, and the cooperative interaction event corresponds to the common interaction target of the first live streaming room and the second live streaming room. The live streaming interface also displays interaction components associated with both the first live streaming room and the second live streaming room, and the interaction component indicates the completion degree of the common interaction target, which is determined based on the first group of interaction events in the first live streaming room and the second group of interaction events in the second live streaming room.

In this way, the embodiments of the present disclosure can link different live streaming rooms for interaction, and based on interaction events in the live streaming rooms, allow different live streaming rooms to interact synchronously with the same event, so as to enhance the interaction and live streaming effects of each live streaming room.

Various example implementations of the solution are described in detail below in conjunction with the accompanying drawings.

### Example Environment

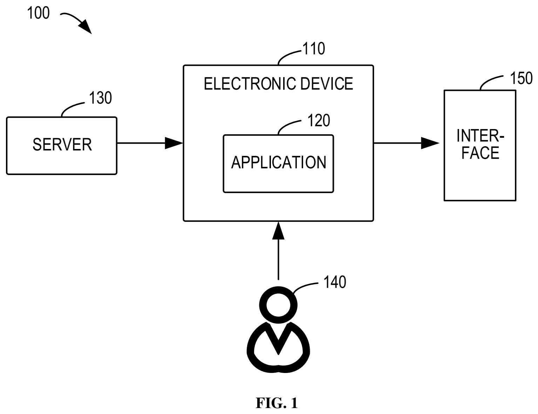

Fig. 1 shows a schematic diagram of an example environment 100 in which embodiments of the present disclosure can be implemented. As shown in Fig. 1, the example environment 100 may include an electronic device 110.

In this example environment 100, electronic device 110 may run an application 120 for providing and watching live streaming. Application 120 may be any suitable type of application for providing and watching live streaming, and examples thereof may include but are not limited to: online video applications, live streaming applications. The user 140 may interact with application 120 via electronic device 110 and / or its attached devices. The user 140 may be, for example, a user providing live streaming content (or streamer) or a user watching live streaming (or audience).

In environment 100 of Fig. 1, if application 120 is in an active state, electronic device 110 may present the live streaming interface 150 through application 120.

In some embodiments, electronic device 110 communicates with server 130 to provide services for application 120. Electronic device 110 may be any type of mobile terminal, fixed terminal or portable terminal, including a mobile phone, a desktop computer, a laptop computer, a notebook computer, a netbook computer, a tablet computer, a media computer, a multimedia tablet, a handheld computer, a portable game terminal, a VR / AR device, a personal communication system (PCS) device, a personal navigation device, a personal digital assistant (PDA), an audio/video player, a digital camera/camcorder, a positioning device, a television receiver, a radio receiver, an e-book device, a game device or any combination thereof, including accessories and peripherals of these devices or any combination thereof. In some embodiments, electronic device 110 may also support any type of interface for the user (such as a "wearable" circuit, etc.).

Server 130 may be an independent physical server, or a server cluster or distributed system composed of a plurality of physical servers, or a cloud server that provides basic cloud computing services such as cloud services, cloud databases, cloud computing, cloud functions, cloud storage, network services, cloud communications, middleware services, domain name services, security services, content distribution networks, and big data and artificial intelligence platforms. Server 130 may include, for example, a computing system/server, such as a mainframe, an edge computing node, a computing device in a cloud environment, etc. Server 130 may provide background services for application 120 that supports virtual scenes in electronic device 110.

A communication connection may be established between server 130 and electronic device 110. The communication connection may be established in a wired manner or a wireless manner. The communication connection may include, but is not limited to, a Bluetooth connection, a mobile network connection, a Universal Serial Bus (USB) connection, a Wireless Fidelity (Wi-Fi) connection, etc., and the embodiments of the present disclosure are not limited in this respect. In the embodiments of the present disclosure, server 130 and electronic device 110 may implement signaling interaction through the communication connection between the two.

It should be understood that the description of the structure and function of the various elements in environment 100 are described for illustrative purposes only and do not imply any limitation on the scope of the present disclosure.

Some example embodiments of the present disclosure will be described below with continued reference to the accompanying drawings.

### Example live streaming interaction

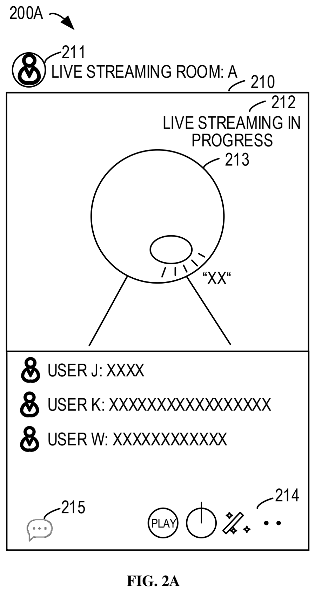

The following will describe an example live streaming interaction process according to some embodiments of the present disclosure in conjunction with Figs. 2A to 2G. Figs. 2A to 2G respectively show example interfaces of the live streaming interaction process according to some embodiments of the present disclosure, and such example interfaces may be provided by, for example, electronic device 110 shown in Fig. 1. Specifically, electronic device 110 may, for example, present such an example interface using application 120 carried thereon.

It should be understood that electronic device 110 can communicate with server 130 to obtain the content, elements, etc. that need to be presented. For the convenience of explanation, the following description will only be based on the execution of electronic device 110.

Referring to Fig. 2A, Fig. 2A shows a live streaming interface 200A (abbreviated as interface 200A, and the subsequent live streaming interfaces 200B - 200G are also abbreviated in a similar manner) of the first live streaming room 210. The user can use the live streaming content area in the interface 200A (for example, the area where the first live streaming room 210 is located) to watch the content in the first live streaming room 210 (for example, the live streaming content provided by streamer 213 who established the first live streaming room 210 (for example, streamer 213 is describing "XX "). Such live streaming content may include any appropriate type of content, including but not limited to: video live streaming content or audio live streaming content, etc.

In some examples, in the interface 200A, an interaction area (for example, an area including a control group 214 and a control 215) is also presented to enable the audience to interact with the first live streaming room (for example, to watch text messages sent by other users such as "user J" and "user K"). For example, the control group 214 includes controls that can be used for the audience to give props to the first live streaming room, participate in interaction mini games in the live streaming room, and the control 215 can be used for the audience to send text messages to the first live streaming room. In the interface 200A, descriptive information 211 and 212 can also be used to indicate the live streaming room information, such as the descriptive information 211 indicating the name and number of the first live streaming room, and the descriptive information 212 indicating whether the live streaming room is currently broadcasting.

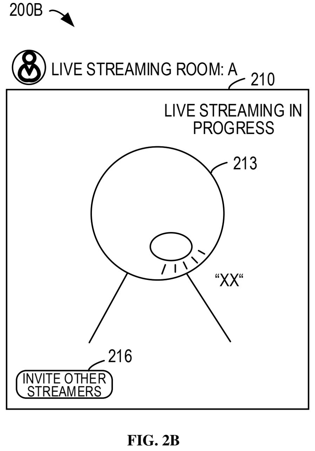

The owner of the first live streaming room, that is, streamer 213 of the first live streaming room, may be provided with an invitation control for inviting other live streaming rooms (also referred to as the second live streaming room) to interact. For example, referring to the interface 200B shown in Fig. 2B, the interface 200B may be specifically presented to streamer 213, and the invitation control 216 in the interface 200B may be used by the streamer of the first live streaming room to send an interaction invitation to the second live streaming room.

If the second live streaming room accepts the interaction invitation, the interaction between the first live streaming room and the second live streaming room can be established. In some embodiments, such a second live streaming room can also be matched and selected by the live streaming room provider (for example, the live streaming platform). For example, the streamer of the first live streaming room can send a matching invitation to the live streaming platform (referred to as the platform) through the invitation control 216 to request the platform to match the second live streaming room for it. Thus, the interaction and interaction between different streamers and live streaming rooms can be established in the form of live streaming rooms to enrich the live streaming content and enhance the fun of the live streaming.

In some embodiments, the interaction can usually be preset by the platform, so that when the streamer 213 expects to interact, he can select at least one common interaction and then send an invitation to other live streaming rooms. The common interaction usually includes a set of specific interaction events, for example, the common interaction can be "Jointly break through", for example, joint interaction can indicate the common interaction targets of the first live streaming room and the second live streaming room, such as obtaining a preset number of real-time comment supports, a preset number of props, etc. within a preset time period. In joint interaction, a plurality of users such as streamers are allowed to cooperate to achieve common targets and task objectives. For example, in cooperative interaction, streamer A and streamer B can work together for the same target (or, in other words, expect to achieve a cooperative interaction event together). For example, for the target of obtaining 1,000 real-time comments within a preset time, after the preset time is reached, the sum of the number of real-time comments obtained by streamer A and the number of real-time comments obtained by streamer B must be at least 1,000 to be considered as achieving a cooperative interaction event. It should be understood that cooperative interaction allows for example, dual streamers, a plurality of streamers, or a plurality of streamers can be grouped and carried out in the form of groups (for example, streamer A and streamer B are the first group, streamer C and streamer D are the second group, and cooperative interaction can be carried out in the form of the first group and the second group). The event of sending an invitation for joint interaction (for example, sending an invitation to other streamers to join the joint interaction based on the invitation control 216) can be called a cooperative interaction event.

Accordingly, the cooperative interaction event may correspond to the common interaction target of the first live streaming room and the second live streaming room. In the case where more than two live streaming rooms participate in the cooperative interaction, the cooperative interaction event may correspond to the common interaction target of all live streaming rooms participating in the interaction. Exemplarily, after the cooperative interaction event is triggered, a common interaction target may be determined for a plurality of live streaming rooms (e.g., the first live streaming room and the second live streaming room) participating in the interaction. In some embodiments, the common target interaction is a target that is expected to be achieved based on the interaction between the first live streaming room and the second live streaming room.

In some embodiments, a common interaction target associated with a plurality of live streaming rooms may be related to the interaction information of the plurality of live streaming rooms, such interaction information being determined, for example, based on a predetermined type of interaction event in each live streaming room. The interaction information may include information indicating the intensity of interaction in each live streaming room, determined based on a specific type of interaction event in each live streaming room. In some scenarios, the interaction information is embodied, for example, by a numerical value, which may be expressed, for example, as an interaction value or "points", etc. Such a common interaction target may correspond to the sum of the "points" of a plurality of live streaming rooms required to reach a preset "points" target.

In some embodiments, the interaction information may be determined based on predetermined types of interaction events in each live streaming room, such as comment events, like events, collection events, gift events, etc. Taking the interaction information as "points" as an example, in some scenarios, different types of interaction events may correspond to different points, for example, like events may correspond to higher points than comment events. Alternatively, the same event may correspond to different points, for example, different gifts may correspond to different points.

Further, after a plurality of live streaming rooms including at least the first live streaming room and the second live streaming room are added to the cooperative interaction, electronic device 110 can update the live streaming interface to simultaneously present the screens of the plurality of live streaming rooms added to the cooperative interaction to achieve interaction between the plurality of live streaming rooms. It should be understood that the distribution of the corresponding screens in the live streaming interface can be adaptively adjusted according to the number of the plurality of live streaming rooms.

In an embodiment of the present disclosure, electronic device 110 can determine different areas in the live streaming interface to respectively present a plurality of live streaming rooms that have joined the cooperative interaction. For example, electronic device 110 can display a first area corresponding to the first live streaming room and a second area corresponding to the second live streaming room in the live streaming interface.

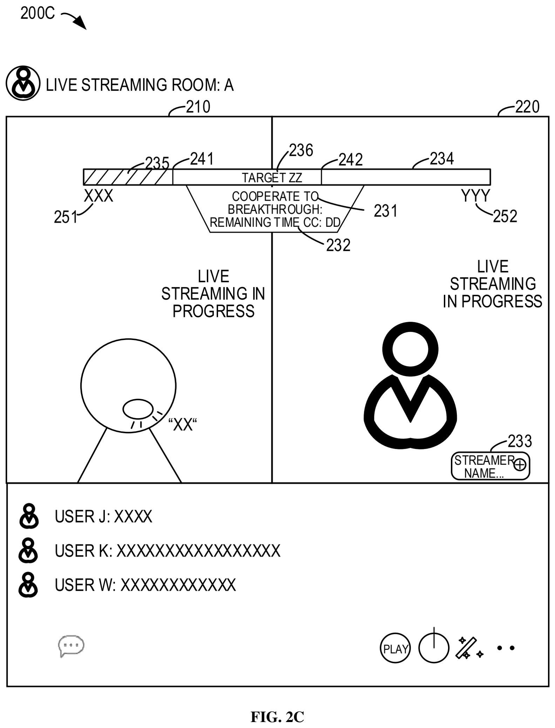

Exemplarily, referring to Fig. 2C, in the interface 200C provided by electronic device 110, the first live streaming room 210 may be presented in the first area of the interface 200C and the second live streaming room 220 may be presented in the second area of the interface 200C. For ease of understanding, the first area and the second area are exemplarily areas corresponding to the first live streaming room 210 and the second live streaming room 220, respectively. Alternatively or additionally, when the live streaming interface switches from presenting the first live streaming room 210 alone to the combination of the first live streaming room 210 and the second live streaming room 220, a transition effect may be added (for example, presenting an icon of "joint interaction is about to begin", text description information, etc.) to prompt the live streaming and the audience that the joint interaction is about to begin.

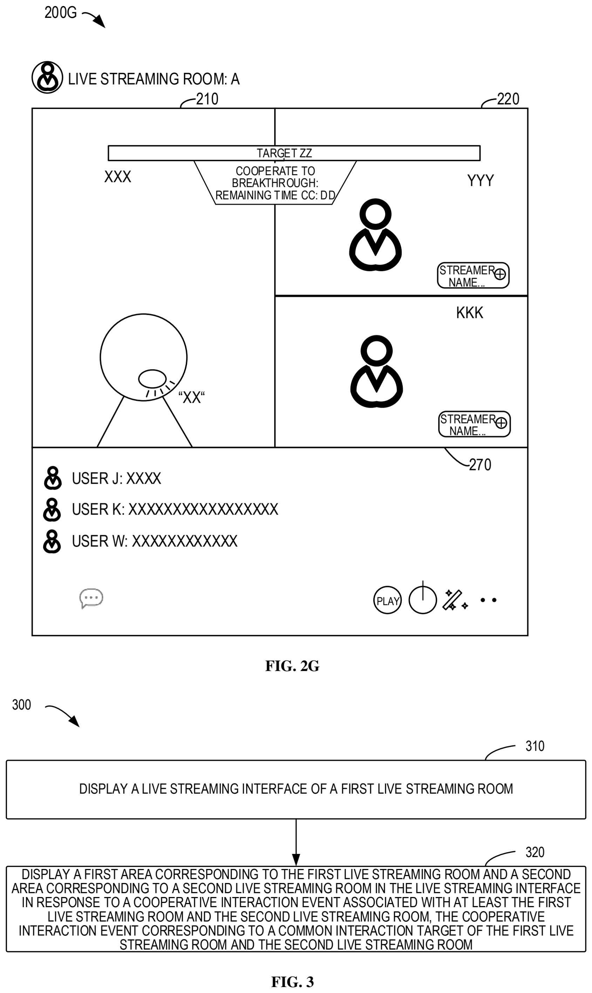

It should be understood that the first area and the second area can be adjusted and determined based on actual needs, and the present disclosure is not intended to limit this. In some embodiments, in order to facilitate user viewing, the sizes of the first area and the second area can be configured to be different (for example, the first area is larger than the second area), so that the user can intuitively understand the live streaming room (that is, the first live streaming room) that he originally watched based on the size of the area. For example, in the case where there are a plurality of second live streaming rooms, the sizes of a plurality of areas can be adjusted in a similar manner to achieve the purpose of presenting a plurality of live streaming rooms at the same time and clearly identify the first live streaming room. By way of example, reference can be made to Fig. 2G. In interface 200G of Fig. 2G, a live streaming interface including a first live streaming room 210, a plurality of second live streaming rooms (for example, a second live streaming room 220 and a second live streaming room 270) can be presented by way of example.

In some embodiments, when the interface 200C simultaneously presents the first live streaming room 210 and the second live streaming room 220, indication information indicating that the live streaming room is interacting with other live streaming rooms can also be presented to assist the user to better understand the interaction status, for example, indication information 231 of " cooperate to breakthrough ".

Alternatively or additionally, the cooperative interaction event may also be associated with a time limit to enhance the fun of the cooperative interaction event. In this case, electronic device 110 may also prompt the remaining time based on the time limit associated with the cooperative interaction event, or provide countdown information that can assist the user in understanding the remaining time. Exemplarily, countdown information 232 may also be presented in the interface 200C to provide the remaining time of the cooperative interaction event.

As an alternative or in addition, because such cooperative interaction is conducted in a cross-live streaming room form, that is, linking the first live streaming room and the second live streaming room, electronic device 110 can also provide a follow entrance 233 to assist the audience to follow other live streaming rooms (for example, the second live streaming room).

Furthermore, the live streaming interface also displays an interaction component associated with both of the first live streaming room and the second live streaming room, and the interaction component indicates a first group of interaction events in the first live streaming room and a second group of interaction events in the second live streaming room. Such a first group of interaction events may include a predetermined type of interaction event that occurs in the first live streaming room during the cooperative interaction. Such a second group of interaction events may include a predetermined type of interaction event that occurs in the second live streaming room during the cooperative interaction.

Alternatively or additionally, the interaction component can also dynamically indicate the impact of the first group of interaction events and/or the second group of interaction events on the cooperative interaction. Exemplarily, referring to Fig. 2C, in the interface 200C, an interaction component 234 associated with the first live streaming room 210 and the second live streaming room 220 is also displayed, which can be used to indicate the completion degree of the common interaction target of the plurality of live streaming rooms participating in the cooperative interaction.

The interaction component 234 can indicate a plurality of interaction events occurring in the first live streaming room 210 (also referred to as a first group of interaction events) and a plurality of interaction events occurring in the second live streaming room 220 (also referred to as a second group of interaction events), or be associated with the first group of interaction events and the second group of interaction events.

In some embodiments, the interaction component may indicate the completion degree of the common interaction target through an appropriate style. For example, the interaction component may present the completion degree of the common interaction target through numbers and/or text; or, the interaction component may also dynamically indicate the change in the completion degree through a style such as a progress control (e.g., a progress bar).

Accordingly, the interaction component 234 may indicate changes in the interaction information caused by the interaction events in the first live streaming room 210 and/or the second live streaming room 220, as well as the results of the changes. In some embodiments, the interaction component 234 is used to indicate the aggregated interaction information of the first live streaming room 210 and the second live streaming room 220, for example, determined based on the sum of the interaction information of the first live streaming room 210 and the interaction information of the second live streaming room 220. In some embodiments, the interaction component 234 may indicate the preset aggregated interaction information required to complete the above-mentioned cooperative interaction event. For example, when the interaction component 234 is filled, it can be considered that sufficient aggregated interaction information is obtained to complete the cooperative interaction event. For example, the aggregated interaction information indicated by the interaction component 234 can be affected by the interaction between the first live streaming room 210 and the second live streaming room 220 at the same time. For example, the interaction information generated by the first live streaming room 210 and the second live streaming room 220 for "cooperate to breakthrough" can be recorded and added to the aggregated interaction information (for example, adding the interaction information of the first live streaming room 210 and the second live streaming room 220), so that different live streaming rooms can break through the level in a cooperative manner. For example, the common interaction target can be 1,000 points. If the interaction information provided by the first live streaming room 210 is 50 points and the interaction information provided by the second live streaming room 220 is 100 points, then the aggregated interaction information corresponding to the first live streaming room 210 and the second live streaming room 220 is 150 points, and 850 points are currently required to complete the common interaction target.

In some embodiments, for cooperative interaction, it may be divided into a plurality of completion stages, that is, for example, the complete cooperative interaction process may include a plurality of stages such as the first stage, the second stage, and the third stage. In such a case, the corresponding interaction target can be preset corresponding to each cooperative interaction stage, that is, in the current stage, the target value of the interaction information expected to be achieved by the aggregated interaction information. For ease of understanding, the interaction targets of each stage can be collectively referred to as preset interaction targets, and the preset interaction targets can usually be set by the platform. In some embodiments, the preset interaction target can be determined based on the first history live streaming information of the first live streaming room and the second history live streaming information of the second live streaming room. It should be understood that when presetting the interaction target, the overall common interaction target needs to be considered, or at least one preset interaction target is determined based on the common interaction target. For example, the preset interaction target can be a certain proportion of the common interaction target. For example, when the common interaction is divided into three stages, the first preset interaction target can correspond to one-third of the common interaction target. It should be understood that the last preset interaction target in the common interaction target should be equivalent to the common interaction target, and will not exceed the common interaction target.

Specifically, the platform (e.g., server 130) can collect the history live streaming information of the live streaming room, and determine the reference information associated with the interaction event based on the history live streaming information of each history live streaming room, and preset the interaction target based on this. For example, in the case where the interaction event is sending real-time comments, server 130 can determine the number of real-time comments in a plurality of stages such as the first stage, the second stage, and the third stage, and finally complete the cooperative interaction event based on the first history live streaming information and the second history live streaming information of the first live streaming room and the second live streaming room in the history live streaming, such as the number of real-time comments.

For example, within one hour, if the number of real-time comments obtained in the first live streaming room is 100 and the number of real-time comments obtained in the second live streaming room is 150, the preset interaction target can be, for example, 80 real-time comments in 20 minutes, 150 real-time comments in 30 minutes, 230 real-time comments in 45 minutes, and 300 real-time comments in total to complete the preset interaction. In addition, as described above, such a number of real-time comments can also be converted into "points", that is, interaction information. For example, one real-time comment is converted into one point, and the corresponding preset interaction target can be 80 points in 20 minutes, which will not be repeated here.

In some embodiments, the interaction component 234 may include a progress control, so as to use the progress control to indicate the comparison between the aggregated interaction information and at least one preset interaction target. Specifically, referring to Fig. 2C, in the interface 200C, the interaction component 234 may further include a progress control 235, and progress control 235 may be used to indicate the comparison between the current aggregated interaction information (e.g., the aggregated interaction information at position 241) and the preset interaction target. In some embodiments, progress control 235 may be presented by partially changing the visual style in the interaction component 234. Exemplarily, referring to Fig. 200C, in the interface 200C, progress control 235 may be presented by changing part of the visual style in the interaction component 234 to indicate that the currently acquired aggregated interaction information is at position 241. Thus, the user can understand the current aggregated interaction information and the aggregated interaction information required for the preset interaction target in the future based on progress control 235, so as to assist the user in deciding the interaction strategy. Alternatively or additionally, the interface 200C may also present prompt information 236 associated with the progress control to prompt the preset interaction target closest to the current position, such as the preset interaction target indicated by the position 242.

In some embodiments, in order to reflect the state and change of the interaction information in the live streaming room, electronic device 110 may also display the first interaction information in the first area. The first interaction information is determined based on each interaction event in the first live streaming room 210 (for the convenience of distinction, it may also be referred to as the first group of interaction events) to identify the contribution of the first live streaming room 210 to the cooperative interaction event. Similarly, electronic device 110 may also display the second interaction information in the second area. Such second interaction information is determined based on each interaction event in the second live streaming room 220 (for the convenience of distinction, it may also be referred to as the second group of interaction events). Exemplarily, in the interface 200C, the first interaction information 251 and the second interaction information 252 are also included. The first interaction information 251 indicates that the interaction information contributed by the first live streaming room 210 is " XXX ", and the second interaction information 252 indicates that the interaction information contributed by the second live streaming room 220 is " YYY ".

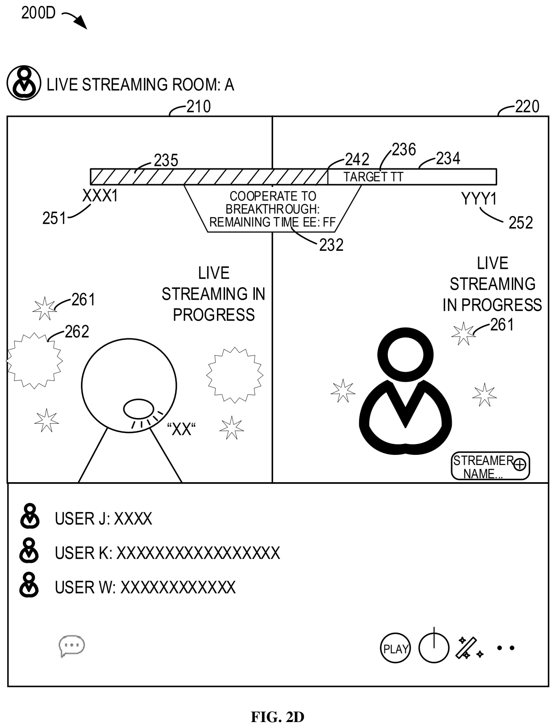

Further, if there are a plurality of stages in the cooperative interaction event, that is, the preset interaction target includes a first preset interaction target, a second preset interaction target, and a plurality of preset interaction targets. Electronic device 110 can also update the progress control in the case where the aggregated interaction information reaches the first preset interaction target, so as to indicate the comparison between the aggregated interaction information and the second preset interaction target. Specifically, it can be further referred to Fig. 2D, when the aggregated interaction information reaches the first preset interaction target, such as the preset interaction target indicated by the position 242, the style of progress control 235 changes from the style in the interface 200C to the style in the interface 200D, so as to indicate the comparison between the aggregated interaction information and the subsequent second preset interaction target (for example, the preset interaction information " TT " required to complete the preset interaction). Thus, after completing a stage, progress control 235 can be used to make the user understand the aggregated interaction information required for the preset interaction target in the future, so as to assist the user in deciding the interaction strategy.

Similarly, electronic device 110 can also update the first interaction information 251 and the second interaction information 252 based on the contribution of the first live streaming room 210 and the second live streaming room 220 to the interaction information, for example, updating "XXX" to "XXX1 " and updating "YYY" to "YYY1 ". Similarly, electronic device 110 can also update the countdown information 232.

In some embodiments, server 130 may also be configured with corresponding resources for preset interaction targets. Accordingly, after the aggregated interaction information reaches the preset interaction target requirements, the first resource corresponding to the preset interaction target is provided to achieve the purpose of motivating users to participate in the interaction, completing the cooperative interaction event, and enhancing the user's participation enthusiasm. As an alternative or in addition, the first resource will be provided to the first live streaming room and the second live streaming room. In some embodiments, the first resource is, for example, a display resource that is additionally added to the live streaming room and presents a reward, which can also be referred to as a target display resource (for example, the background of the live streaming room, the ornaments in the live streaming room, the special effects in the live streaming room, etc.). Thus, the purpose of motivating the audience and the streamer is achieved by watching the effect in the live streaming room. For example, with reference to Fig. 2D, when the aggregated interaction information reaches a position 242 corresponding to a preset interaction target, the interface 200D may present and apply a plurality of visual elements 261 (for example, live streaming special effects, and the visual elements provided to the live streaming room are subsequently involved, and are also exemplified in the form of special effects in the live streaming room) provided to the first live streaming room 210 and the second live streaming room 220 to enhance the live streaming effect.

Further, in the case of interaction information that contributes more to cooperative interaction events in a live streaming room, for example, a second incentive related to the degree of contribution may also be configured (the form of which may be similar to the first resource, that is, for example, an additional display style of reward is added to the live streaming room to present the reward) to better correspond to and reflect the contribution of the live streaming room. For example, the second resource may be configured in server 130, so that the second resource is used to motivate the streamer with more contributions. In some embodiments, after determining that the aggregated interaction information reaches at least one preset interaction target, electronic device 110 presents the second resource to the target live streaming room with a higher contribution value between the first live streaming room and the second live streaming room. Exemplarily, referring to Fig. 2D, in the interface 200D, if the contribution value of the first live streaming room 210 is higher than that of the second live streaming room 220 (for example, "XXX" is greater than "YYY "), the second resource may be provided to the first live streaming room 210, for example, a visual element 262 is presented to the first live streaming room 210 alone.

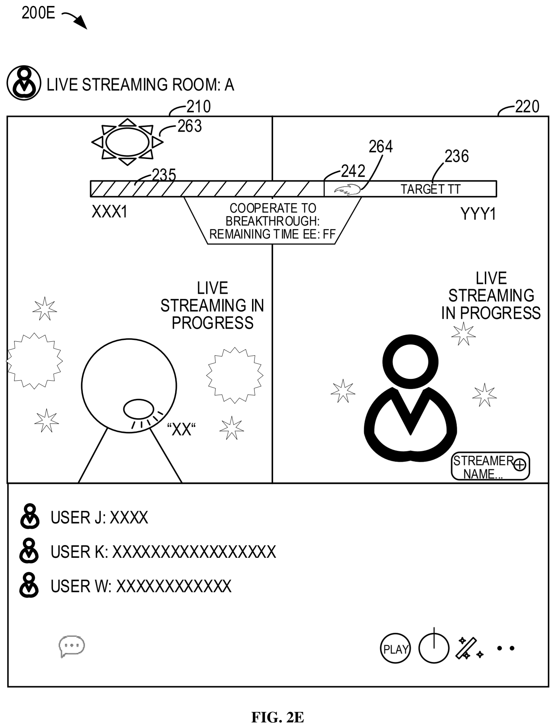

In some embodiments, in order to better reflect the second resource, in some embodiments, a preset identification can also be displayed in the live streaming interface in association with the target area corresponding to the target live streaming room as at least part of the second resource (similarly, the preset identification can also be, for example, an additional display style for the live streaming room to present a reward). Specifically, the second resource presented by electronic device 110 can add a preset identification to the display area (i.e., the first area or the second area) of the first live streaming room and the second live streaming room to more clearly and differentially motivate the live streaming room with higher contribution and enhance user enthusiasm. For example, referring to Fig. 2E, in the interface 200E, if the contribution value of the first live streaming room 210 is higher than that of the second live streaming room 220, the first area of the first live streaming room 210 can be associated with a preset identification 263 as part of the second resource.

In addition, in order to enrich the interaction experience and increase the fun of the interaction, some special interaction events can also be set. For example, in a cooperative interaction event based on providing props, some special props can be preset, and the first interaction event is triggered when these special props are received in the live streaming room, so as to provide interaction information for the live streaming room with a rewarding nature. For example, the interaction information provided by giving prop A is usually 10, and for special prop B, such interaction information can be 100. It should be understood that the first interaction event is intended to represent a specific type of event that occurs in the live streaming room, which can be included in the first group of interaction events or the second group of interaction events used to determine the interaction information discussed above.

Accordingly, corresponding prompt information can also be added for such a first interaction event to prompt the occurrence of the event and to motivate the user who provided the props. Electronic device 110 can also display a first event element (for example, a display style of a preset graphic) in association with the progress control for the first interaction event in the first live streaming room 210 or the second live streaming room 220, and the first event element indicates the first change of the aggregated interaction information caused by the first interaction event. Exemplarily, referring to Fig. 200E, in the interface 200E, if an event of giving away special props occurs in the first live streaming room 210, electronic device 110 can present a first event element 264 in association with progress control 235 to indicate the first change of the aggregated interaction information caused by the first interaction event. Alternatively or additionally, the first event element can also be different graphics, such as a first graphic, a second graphic, or a descriptive information directly used to indicate a numerical value, so that different first changes can also be reflected by using a visual style.

In some embodiments, a plurality of first interaction events may be configured differentially, and accordingly, the interaction information corresponding to each first interaction event and the changes that can be generated to the aggregated interaction information may be different. In order to reflect such differences, or to better reflect the value of the interaction event, in some embodiments, the display style of the first event element is determined based on the size of the first change. Specifically, the electronic device 110 may determine the display style of the first event element based on the size of the first change. For example, for the first event element 264, if the first change "KK" that can be generated by another first interaction event is greater than "HH", the display style corresponding to "KK" (for example, the size of the first event element 264) may be selected to be greater than "HH", so as to reflect the difference between the two first interactions and the event value corresponding to the first change "KK".

In order to better reflect the live streaming room to which the special interaction behavior belongs and to more clearly reflect the contribution of the live streaming room. When interaction information is presented in the live streaming interface, the display area of the associated live streaming room can also present a second event element (for example, a display style associated with the change value of the interaction information, such as the numerical value of the magnified change value) to identify the change of the target interaction information corresponding to the live streaming room caused by the second interaction event. It should be understood that the second interaction event is intended to represent a specific type of event that occurs in the live streaming room, which can be included in the first group of interaction events or the second group of interaction events used to determine the interaction information discussed above.

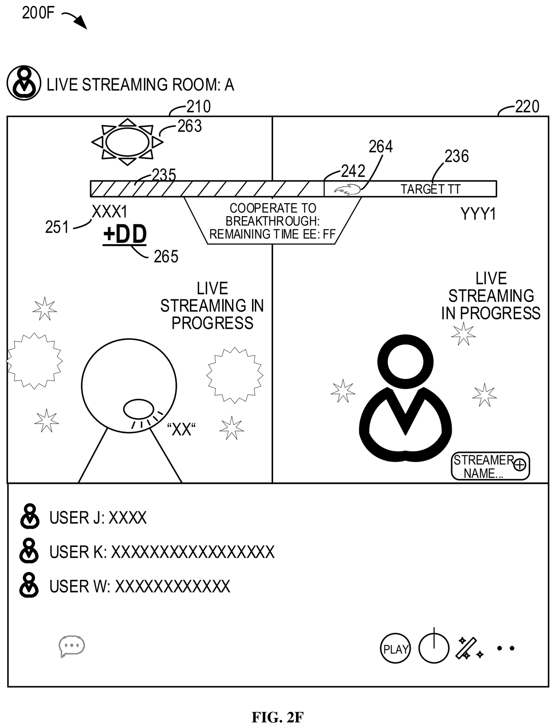

In some embodiments, electronic device 110 may respond to a second interaction event (e.g., sending a special prop) in the first live streaming room 210 or the second live streaming room 220, and display a second event element in the display area of the live streaming room where the second interaction event occurs (i.e., the first area or the second area) to indicate a second change in the first interaction information 251 or the second interaction information 252 caused by the second interaction event. For example, with reference to Fig. 2F, in the interface 200F, for example, when a second interaction event occurs in the first live streaming room 210, electronic device 110 may use a second event element 265 to identify the change in the first interaction information 251 (e.g., adding "DD ").

Similar to the method for the above-mentioned first interaction event, the display style of the second event element associated with the second interaction event can also be adjusted based on the ability to influence the interaction information. For example, the display style of the second event element can be adjusted according to the size of the second change (for example, the size of the second event element 265), which will not be repeated here.

In this way, the embodiments of the present disclosure can link different live streaming rooms for interaction, and can cooperatively achieve common targets based on the aggregation of interaction events in a plurality of live streaming rooms, thereby improving the sense of collaboration between live streaming rooms and enhancing the user's live streaming experience.

### Example Process

Fig. 3 shows a flowchart of an example process 300 of live streaming interaction according to some embodiments of the present disclosure. Process 300 may be implemented at electronic device 110. Process 300 is described below with reference to Fig. 1.

Fig. 3, in box 310, electronic device 110 displays a live streaming interface of a first live streaming room.

In block 320, electronic device 110 displays a first area corresponding to the first live streaming room and a second area corresponding to a second live streaming room in the live streaming interface in response to a cooperative interaction event associated with at least the first live streaming room and the second live streaming room, the cooperative interaction event corresponding to a common interaction target of the first live streaming room and the second live streaming room. In an embodiment of the present disclosure, the live streaming interface further displays an interaction component associated with both the first live streaming room and the second live streaming room, and the interaction component indicates the completion degree of the common interaction target, and the completion degree is determined based on a first group of interaction events in the first live streaming room and a second group of interaction events in the second live streaming room.

In some embodiments, the interaction component is used to indicate aggregated interaction information of the first live streaming room and the second live streaming room, and the aggregated interaction information is determined based on first interaction information corresponding to the first group of interaction events and second interaction information corresponding to the second group of interaction events.

In some embodiments, the interaction component includes a progress control, which is used to represent a comparison between the aggregated interaction information and at least one preset interaction target, wherein the at least one preset interaction target is determined based on the common interaction target.

In some embodiments, at least one preset interaction information includes a first preset interaction target, and further includes: in response to the aggregated interaction information reaching the first preset interaction target, updating a progress control, wherein the updated progress control is used to indicate a comparison between the aggregated interaction information and a second preset interaction target.

In some embodiments, at least one preset interaction target is determined based on first history live streaming information of the first live streaming room and second history live streaming information of the second live streaming room.

In some embodiments, process 300 also includes: in response to the aggregated interaction information reaching at least one preset interaction target, providing a first resource corresponding to the at least one preset interaction target to the first live streaming room and the second live streaming room.

In some embodiments, providing a first resource corresponding to at least one preset interaction information to a first live streaming room and a second live streaming room includes: applying a target display resource corresponding to at least one preset interaction information to the first live streaming room and the second live streaming room as at least part of the first resource.

In some embodiments, process 300 also includes: in response to the aggregated interaction information reaching at least one preset interaction target, providing a second resource to a target live streaming room among the first live streaming room and the second live streaming room, wherein the target live streaming room is determined based on the degree of contribution of the first live streaming room and the second live streaming room to the aggregated interaction information.

In some embodiments, providing a second resource to a target live streaming room among the first live streaming room and the second live streaming room includes: in the live streaming interface, displaying a preset identification associated with a target area corresponding to the target live streaming room as at least a part of the second resource, and the target area includes the first area or the second area.

In some embodiments, process 300 also includes: in response to a first interaction event in the first live streaming room or the second live streaming room, displaying a first event element associated with the progress control, the first event element indicating a first change in the aggregated interaction information caused by the first interaction event.

In some embodiments, the display style of the first event element is determined based on the size of the first change.

In some embodiments, process 300 also includes: displaying first interaction information in the first area, the first interaction information being determined based on a first set of interaction events in the first live streaming room; and displaying second interaction information in the second area, the second interaction information being determined based on a second set of interaction events in the second live streaming room.

In some embodiments, process 300 also includes: in response to a second interaction event in the first live streaming room or the second live streaming room, displaying a second event element associated with the first area or the second area, the second event element indicating a second change in the target interaction information caused by the second interaction event, and the target interaction information includes the first interaction information or the second interaction information.

In some embodiments, the display style of the second event element is determined based on the size of the second change.

In some embodiments, the live streaming interface also displays countdown information, which indicates the remaining time associated with the cooperative interaction event.

In some embodiments, the second live streaming room includes: a live streaming room invited by the first live streaming room; and/or a live streaming room matched by a live streaming platform.

### Example apparatus and device

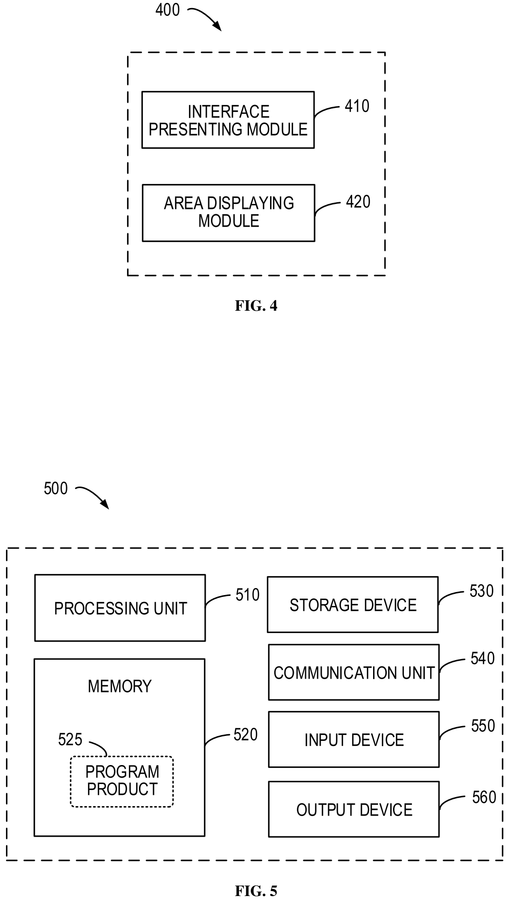

The embodiments of the present disclosure also provide corresponding apparatuses for implementing the above methods or processes. Fig. 4 shows a schematic structural block diagram of an apparatus 400 for live streaming interaction according to certain embodiments of the present disclosure. The apparatus 400 may be implemented as or included in an electronic device 110. Each module/component in the apparatus 400 may be implemented by hardware, software, firmware, or any combination thereof.

The apparatus 400 includes an interface presenting module 410 configured to display a live streaming interface of a first live streaming room. The apparatus 400 also includes an area displaying module 420 configured to display a first area corresponding to the first live streaming room and a second area corresponding to the second live streaming room in the live streaming interface in response to a cooperative interaction event associated with at least the first live streaming room and the second live streaming room, wherein the cooperative interaction event corresponds to a common interaction target of the first live streaming room and the second live streaming room; wherein the live streaming interface also displays an interaction component associated with both the first live streaming room and the second live streaming room, wherein the interaction component indicates a completion degree of the common interaction target, and the completion degree is determined based on a first group of interaction events in the first live streaming room and a second group of interaction events in the second live streaming room.

In some embodiments, the interaction component is used to indicate aggregated interaction information of the first live streaming room and the second live streaming room, and the aggregated interaction information is determined based on first interaction information corresponding to the first group of interaction events and second interaction information corresponding to the second group of interaction events.

In some embodiments, the interaction component includes a progress control, which is used to represent a comparison between the aggregated interaction information and at least one preset interaction target, wherein the at least one preset interaction target is determined based on the common interaction target.

In some embodiments, at least one preset interaction information includes a first preset interaction target, and further includes: in response to the aggregated interaction information reaching the first preset interaction target, updating a progress control, wherein the updated progress control is used to indicate a comparison between the aggregated interaction information and a second preset interaction target.

In some embodiments, at least one preset interaction target is determined based on first history live streaming information of the first live streaming room and second history live streaming information of the second live streaming room.

In some embodiments, the apparatus 400 also includes: a first resource providing module, configured to provide a first resource corresponding to at least one preset interaction target to the first live streaming room and the second live streaming room in response to the aggregated interaction information achieving at least one preset interaction target.

In some embodiments, providing a first resource corresponding to at least one preset interaction information to a first live streaming room and a second live streaming room includes: applying a target display resource corresponding to at least one preset interaction information to the first live streaming room and the second live streaming room as at least part of the first resource.

In some embodiments, apparatus 400 also includes: a second resource providing module, configured to provide second resources to a target live streaming room among the first live streaming room and the second live streaming room in response to the aggregated interaction information reaching at least one preset interaction target, wherein the target live streaming room is determined based on the degree of contribution of the first live streaming room and the second live streaming room to the aggregated interaction information.

In some embodiments, providing a second resource to a target live streaming room among the first live streaming room and the second live streaming room includes: in the live streaming interface, displaying a preset identification associated with a target area corresponding to the target live streaming room as at least a part of the second resource, and the target area includes the first area or the second area.

In some embodiments, apparatus 400 also includes: a first event element display module, configured to respond to a first interaction event in the first live streaming room or the second live streaming room, and display a first event element associated with the progress control, wherein the first event element indicates a first change in the aggregated interaction information caused by the first interaction event.

In some embodiments, the display style of the first event element is determined based on the size of the first change.

In some embodiments, apparatus 400 also includes: an interaction information display module, configured to display first interaction information in a first area, the first interaction information being determined based on a first set of interaction events in the first live streaming room; and displaying second interaction information in a second area, the second interaction information being determined based on a second set of interaction events in the second live streaming room.

In some embodiments, apparatus 400 also includes: a second event element display module, configured to display a second event element in response to a second interaction event in the first live streaming room or the second live streaming room, associated with the first area or the second area, the second event element indicating a second change in the target interaction information caused by the second interaction event, and the target interaction information includes the first interaction information or the second interaction information.

In some embodiments, the display style of the second event element is determined based on the size of the second change.

In some embodiments, the live streaming interface also displays countdown information, which indicates the remaining time associated with the cooperative interaction event.

In some embodiments, the second live streaming room includes: a live streaming room invited by the first live streaming room; and/or a live streaming room matched by a live streaming platform.

Fig. 5 shows a block diagram of an electronic device 500 in which one or more embodiments of the present disclosure may be implemented. It should be understood that the electronic device 500 shown in Fig. 5 is merely example and should not constitute any limitation on the functionality and scope of the embodiments described herein. The electronic device 500 shown in Fig. 5 may be used to implement electronic device 110 of Fig. 1.

Fig. 5, electronic device 500 is in the form of a general electronic device. Components of electronic device 500 may include, but are not limited to, one or more processors or processing units 510, memory 520, storage device 530, one or more communication units 540, one or more input devices 550, and one or more output devices 560. Processing unit 510 may be an actual or virtual processor and is capable of performing various processes according to a program stored in memory 520. In a multi-processor system, a plurality of processing units execute computer executable instructions in parallel to improve the parallel processing capability of electronic device 500.

The electronic device 500 typically includes a plurality of computer storage medium. Such medium may be any accessible medium accessible to the electronic device 500, including but not limited to volatile and non-volatile medium, removable and non-removable medium. The memory 520 may be a volatile memory (e.g., a register, a cache, a random access memory (RAM)), a non-volatile memory (e.g., a read-only memory (ROM), an electrically erasable programmable read-only memory (EEPROM), flash memory), or some combination thereof. The storage device 530 may be a removable or non-removable medium, and may include a machine-readable medium, such as a flash drive, a disk, or any other medium, which may be capable of being used to store information and/or data (e.g., training data for training) and may be accessed within the electronic device 500.

The electronic device 500 may further include additional removable/non-removable, volatile/non-volatile storage medium. Although not shown in Fig. 5, a disk drive for reading or writing from a removable, non-volatile disk (e.g., a "floppy disk") and an optical drive for reading or writing from a removable, non-volatile optical disk may be provided. In these cases, each drive may be connected to a bus (not shown) by one or more data medium interfaces. The memory 520 may include a computer program product 525 having one or more program modules configured to perform various methods or actions of various embodiments of the present disclosure.

The communication unit 540 implements communication with other electronic devices through a communication medium. In addition, the functions of the components of the electronic device 500 can be implemented in a single computing cluster or a plurality of computing machines that can communicate through a communication connection. Therefore, the electronic device 500 can operate in a networked environment using a logical connection with one or more other servers, a network personal computer (PC), or another network node.

The input device 550 may be one or more input devices, such as a mouse, a keyboard, a tracking ball, etc. The output device 560 may be one or more output devices, such as a display, a speaker, a printer, etc. The electronic device 500 may also communicate with one or more external devices (not shown) through the communication unit 540 as needed, such as a storage device, a display device, etc., communicate with one or more devices that allow a user to interact with the electronic device 500, or communicate with any device that allows the electronic device 500 to communicate with one or more other electronic devices (e.g., a network card, a modem, etc.). Such communication may be performed via an input/output (I/O) interface (not shown).

According to an example implementation of the present disclosure, a computer-readable storage medium is provided, on which computer-executable instructions are stored, wherein the computer-executable instructions are executed by a processor to implement the method described above. According to an example implementation of the present disclosure, a computer program product is also provided, which is tangibly stored on a non-transitory computer-readable medium and includes computer-executable instructions, and the computer-executable instructions are executed by a processor to implement the method described above.

The present disclosure are described herein with reference to the flowcharts and/or block diagrams of the methods, apparatus, device, and computer program products implemented according to the present disclosure. It should be understood that each box in the flowchart and/or block diagram and the combination of each box in the flowchart and/or block diagram can be implemented by computer-readable program instructions.

These computer-readable program instructions can be provided to a processing unit of a general-purpose computer, a special-purpose computer, or other programmable data processing apparatus, thereby producing a machine, so that when these instructions are executed by the processing unit of the computer or other programmable data processing apparatus, an apparatus that implements the functions/actions specified in one or more boxes in the flowchart and/or block diagram is generated. These computer-readable program instructions can also be stored in a computer-readable storage medium, and these instructions cause the computer, programmable data processing apparatus, and/or other device to work in a specific manner, so that the computer-readable medium storing the instructions includes a manufactured product, which includes instructions for implementing various aspects of the functions/actions specified in one or more boxes in the flowchart and/or block diagram.

Computer-readable program instructions can be loaded onto a computer, other programmable data processing apparatus, or other device so that a series of operational steps are performed on the computer, other programmable data processing apparatus, or other device to produce a computer-implemented process, so that the instructions executed on the computer, other programmable data processing apparatus, or other device implement the functions/actions specified in one or more boxes in the flowchart and/or block diagram.

The flow chart and block diagram in the accompanying drawings show the possible architecture, function and operation of the system, method and computer program product according to a plurality of implementations of the present disclosure. In this regard, each square box in the flow chart or block diagram can represent a part of a module, program segment or instruction, and a part of a module, program segment or instruction includes one or more executable instructions for realizing the logical function of the specification. In some implementations as replacements, the function marked in the square box can also occur in a sequence different from that marked in the accompanying drawings. For example, two continuous square boxes can actually be executed substantially in parallel, and they can sometimes be executed in reverse order, depending on the functions involved. It should also be noted that each square box in the block diagram and/or flow chart, and the combination of the square boxes in the block diagram and/or flow chart can be realized by a special hardware-based system that performs the function or action of the specification, or can be realized by a combination of special hardware and computer instructions.

Various implementations of the present disclosure have been described above and the above description is only example rather than exhaustive and is not limited to the implementations of the present disclosure. Many modifications and alterations, without deviating from the scope and spirit of the explained various implementations, are obvious for those skilled in the art. The selection of terms in the text aims to best explain principles and actual applications of each implementation and technical improvements made in the market by each embodiment, or enable others of ordinary skill in the art to understand implementations of the present disclosure.

## Claims

1. A method for live streaming interaction, comprising:
displaying a live streaming interface of a first live streaming room; and
displaying a first area corresponding to the first live streaming room and a second area corresponding to a second live streaming room in the live streaming interface in response to a cooperative interaction event associated with at least the first live streaming room and the second live streaming room, the cooperative interaction event corresponding to a common interaction target of the first live streaming room and the second live streaming room;
wherein the live streaming interface further displays an interaction component associated with both of the first live streaming room and the second live streaming room, the interaction component indicates a completion degree of the common interaction target, and the completion degree is determined based on a first group of interaction events in the first live streaming room and a second group of interaction events in the second live streaming room.

2. The method of claim 1, wherein the interaction component is used to indicate the aggregated interaction information of the first live streaming room and the second live streaming room, and the aggregated interaction information is determined based on first interaction information corresponding to the first group of interaction events and second interaction information corresponding to the second group of interaction events.

3. The method of claim 2, wherein the interaction component comprises a progress control, and the progress control is used to represent a comparison between the aggregated interaction information and at least one preset interaction target, wherein the at least one preset interaction target is determined based on the common interaction target.

4. The method of claim 3, wherein the at least one preset interaction information comprises a first preset interaction target, and the method further comprises:
updating the progress control in response to the aggregated interaction information reaching the first preset interaction target, wherein the updated progress control is used to indicate a comparison between the aggregated interaction information and a second preset interaction target.

5. The method of claim 3, wherein the at least one preset interaction target is determined based on first history live streaming information of the first live streaming room and second history live streaming information of the second live streaming room.

6. The method of claim 3, further comprising:
providing a first resource corresponding to the at least one preset interaction target to the first live streaming room and the second live streaming room in response to the aggregated interaction information reaching the at least one preset interaction target.

7. The method of claim 6, wherein providing the first resource corresponding to the at least one preset interaction information to the first live streaming room and the second live streaming room comprises:
applying a target display resource corresponding to the at least one preset interaction information to the first live streaming room and the second live streaming room as at least part of the first resource.

8. The method of claim 3, further comprising:
providing a second resource to a target live streaming room of the first live streaming room and the second live streaming room in response to the aggregated interaction information reaching the at least one preset interaction target, the target live streaming room being determined based on a contribution degree of the first live streaming room and the second live streaming room to the aggregated interaction information.

9. The method of claim 8, wherein providing the second resource to the target live streaming room in the first live streaming room and the second live streaming room comprises:
displaying, in the live streaming interface, a preset identification in association with a target area corresponding to the target live streaming room as at least a part of the second resource, the target area comprising the first area or the second area.

10. The method of claim 3, further comprising:
displaying a first event element in association with the progress control in response to a first interaction event in the first live streaming room or the second live streaming room, the first event element indicating a first change in the aggregated interaction information caused by the first interaction event.

11. The method of claim 10, wherein a display style of the first event element is determined based on a size of the first change.

12. The method of claim 1, further comprising:
displaying first interaction information in the first area, the first interaction information being determined based on the first group of interaction events in the first live streaming room; and
displaying second interaction information in the second area, the second interaction information being determined based on the second group of interaction events in the second live streaming room.

13. The method of claim 12, further comprising:
displaying a second event element in association with the first area or the second area in response to a second interaction event in the first live streaming room or the second live streaming room, the second event element indicating a second change in target interaction information caused by the second interaction event, the target interaction information comprising the first interaction information or the second interaction information.

14. The method of claim 13, wherein a display style of the second event element is determined based on a size of the second change.

15. The method of claim 1, wherein the live streaming interface further displays countdown information indicating remaining time associated with the cooperative interaction event.

16. The method of claim 1, wherein the second live streaming room comprises:
a live streaming room invited by the first live streaming room; and/or
a live streaming room matched by a live streaming platform.

17. An apparatus for live streaming interaction, comprising:
an interface presenting module, configured to display a live streaming interface of a first live streaming room;
an area displaying module, configured to display a first area corresponding to the first live streaming room and a second area corresponding to a second live streaming room in the live streaming interface in response to a cooperative interaction event associated with at least the first live streaming room and the second live streaming room, the cooperative interaction event corresponding to a common interaction target of the first live streaming room and the second live streaming room;
wherein the live streaming interface further displays an interaction component associated with both of the first live streaming room and the second live streaming room, the interaction component indicates a completion degree of the common interaction target, and the completion degree is determined based on a first group of interaction events in the first live streaming room and a second group of interaction events in the second live streaming room.

18. An electronic device comprising:
at least one processing unit; and
at least one memory coupled to the at least one processing unit and storing instructions for execution by the at least one processing unit, the instructions, when executed by the at least one processing unit, causing the electronic device to perform a method according to any of claims 1 to 16.

19. A computer readable storage medium, having a computer program stored thereon, the computer program, when executed by a processor, causing the processor to implement a method according to any of claims 1 to 16.
